# EUROPÄISCHE PATENTANMELDUNG

(11) **EP 2 441 604 A1**
(43) Veröffentlichungstag der Anmeldung: **18.04.2012**
(21) Anmeldenummer: 12150345.2
(22) Anmeldetag: 30.01.2008
(51) Int. Cl.: B60G 7/00, B60G 9/00

(54) **Achseinbindung für eine gefederte Fahrzeugachse**

(30) Priorität: 13.02.2007 DE 102007006972
(62) Teilanmeldung aus: 08001679.3
(71) Anmelder: BPW Bergische Achsen KG, 51674 Wiehl (DE)
(72) Erfinder: Rossenbach, Bernhard, 51674 Wiehl (DE)
(74) Vertreter: Christophersen & Partner

(57) **Zusammenfassung**

Vorgeschlagen wird eine Achseinbindung für eine Achseinbindung für eine gefederte Fahrzeugachse mit einem lang gestreckten Achskörper (1), den Achskörper an seiner Oberoder Unterseite kreuzenden Längslenkern (2) sowie quer sowohl zu den Längslenkern, wie auch zu dem Achskörper verlaufenden, diese Teile in gegenseitiger Anlage einbindenden Zugelementen (6).

Um die Achseinbindung hinsichtlich der im Fahrbetrieb auftretenden seitlichen Kräfte zu verbessern, ist der Achskörper (1) im Einbindungsbereich mit einer Formstruktur (13) versehen ist, welche den Längslenker (2) formkorrespondierend aufnimmt und in Längsrichtung (L) des Achskörpers (1) örtlich bindet. Die Formstruktur (13) weist zwei Stützflächen (14a, 14b) auf, von denen sich die eine von der einen und die andere von der anderen Seite her gegen die Seitenwand des Längslenkers (2) abstützt.

## Beschreibung

Die Erfindung betrifft eine Achseinbindung für eine gefederte Fahrzeugachse mit einem langgestreckten Achskörper, den Achskörper an seiner Ober- oder Unterseite kreuzenden Längslenkern sowie quer sowohl zu den Längslenkern, wie auch zu dem Achskörper verlaufenden, diese Teile in gegenseitiger Anlage einbindenden Zugelementen, wobei der Achskörper im Einbindungsbereich mit einer Formstruktur versehen ist, welche den Längslenker in Längsrichtung des Achskörpers örtlich bindet.

Bei einer aus der EP 1 088 687 A1 bekannten Achseinbindung ist der Längslenker dort, wo sich Achskörper und Längslenker kreuzen, um den Achskörper gekrümmt. Auf diese Weise lässt sich der Achskörper an der Unterseite des Längslenkers in der gebildeten Aushöhlung anordnen, wobei die Kontur der Aushöhlung im Wesentlichen der zylindrischen Umfangskontur des Achskörpers entspricht. Im Bereich der Achseinbindung ist der Achskörper durch zwei Halbschalen verstärkt. Um die sich kreuzenden Teile in dieser Anordnung zu fixieren, sind Zugelemente in Gestalt U-förmiger Bügel um den Achskörper geführt. Die freien Bügelenden stützen sich an einer Platte ab, die sich im Kreuzungsbereich von oben auf dem Längslenker abstützt. Mittels der Zugelemente werden Längslenker und Achskörper in gegenseitiger Anlage eingebunden. Infolge der Anordnung des zylindrischen Achskörpers innerhalb einer teilweisen Umbiegung durch den Längslenker ist die Achseinbindung in Fahrzeuglängsrichtung ausreichend fixiert. In seitlicher Richtung hingegen hängt die Qualität der Fixierung letztlich von der Stärke ab, mit der die Zugelemente angezogen sind.

Eine ähnliche Achseinbindung ist aus der DE 296 15 286 U1 bekannt. Auch diese ist hinsichtlich der im Fahrbetrieb auftretenden seitlichen Kräfte abhängig von der Stärke, mit welcher die Achskörper und Längslenker gegeneinander beaufschlagenden Zugelemente angezogen sind.

Bei einer aus der US 2004/0212166 A1 bekannten Achseinbindung sind zur gegenseitigen Fixierung von Achskörper und Längslenker Zugelemente in Gestalt U-förmiger Bügel um den Achskörper geführt. Bei einer Ausführungsform des im Querschnitt rechteckigen Achskörpers ist dieser im Bereich der Anlage des Längslenkers mit einer Einsenkung in Gestalt einer Rinne von teilkreisförmigem Querschnitt versehen. Umgekehrt ist der Längslenker mit einem Vorsprung von zu der Rinne korrespondierender Gestalt versehen, um so die Teile zueinander zu positionieren. Die Gestaltung der Rinne in dem Achskörper und des korrespondierenden Vorsprungs an dem Längslenker jeweils als Rundung ist zwar für eine gegenseitige Positionierung dieser Teile ausreichend, vermag jedoch keinen wirklichen Formschluss bereitzustellen, der auch bei den im Praxisbetrieb hohen seitlichen Kräften auf die Achseinbindung noch ausreichend wäre. Vielmehr ist auch bei der Achseinbindung nach der US 2004/0212166 A1 die Übertragung seitlicher Kräfte von der Stärke abhängig, mit welcher die Achskörper und Längslenker gegeneinander beaufschlagenden Zugelemente angezogen sind.

Der Erfindung liegt die Aufgabe zugrunde, die Achseinbindung hinsichtlich der im Fahrbetrieb auftretenden seitlichen Kräfte zu verbessern.

Zur Lösung dieser Aufgabe wird eine Achseinbindung mit den Merkmalen des Anspruchs 1 vorgeschlagen. Bei dieser weist die Formstruktur zur formkorrespondierenden Aufnahme des Längslenkers zwei Stützflächen auf, von denen sich die eine von der einen und die andere von der anderen Seite her gegen den Längslenker abstützt. Auf diese Weise ist ein Versatz des Längslenkers in Längsrichtung des Achskörpers ausgeschlossen, ohne dass es entscheidend auf die Stärke ankommt, mit welcher die sich kreuzenden Teile gegeneinander gezogen werden.

Infolge der Formstruktur, welche den Längslenker und/oder die Zugelemente formkorrespondierend aufnimmt, vermag die Achseinbindung die im Fahrbetrieb auftretenden seitlichen Kräfte zu übertragen, ohne dass diese Übertragung ausschließlich von der Stärke abhängig wäre, mit welcher die Zugelemente die beteiligten Teile in eine gegenseitige Anlage einbinden, d. h. gegeneinander ziehen.

Die Formstruktur ist eine auf einen Längsabschnitt des Achskörpers beschränkte Vertiefung, die als eine Verformung des Rohrquerschnitts ausgestaltet ist.

Mit einer weiteren Ausgestaltung wird vorgeschlagen, dass die der gegenseitigen Anlage von Achskörper und Längslenker dienende Anlagefläche im Wesentlichen eben gestaltet ist. Des Weiteren wird vorgeschlagen, dass die Stützflächen gemeinsam mit der Anlagefläche eine kanalförmig gestaltete Lenkeraufnahme bilden.

Weiter wird vorgeschlagen, dass sich der Achskörper aus mehreren Längsabschnitten zusammensetzt, und dass die Längsabschnitte umfassen:
a) zwei Verbindungsabschnitte, an denen einstückig die Formstrukturen ausgebildet sind
   und
b) ein Zentralrohr als mittleren Längsabschnitt, an dessen Enden die Verbindungsabschnitte vorzugsweise durch Schweißen befestigt sind.

Zu den Längsabschnitten des Achskörpers können ferner auch Radträgerabschnitte gehören, die außen an den Verbindungsabschnitten befestigt sind, vorzugsweise durch Schweißen.

Gemäß einer weiteren Ausgestaltung kann jeder Verbindungsabschnitt entlang einer in Achskörperlängsrichtung verlaufenden Trennebene in zwei Formhälften unterteilt sein. Diese Formhälften können Halbschalen sein, die sich zu einem Rohrstück ergänzen. Zur Reduzierung des Gewichts bei zugleich hoher Festigkeit kann das durch die Halbschalen gebildete Rohrstück einen Rechteckquerschnitt mit vier Wandabschnitten und vier Übergangsradien aufweisen. Zur Gewichtsreduzierung muss die Wandstärke in den Übergangsradien nicht größer sein, als die Wandstärke in den Wandabschnitten.

Des Weiteren wird vorgeschlagen, dass die beiden Stützflächen und die Anlagefläche einstückig an der ersten Formhälfte angeformt sind. Dies kann von Vorteil sein, wenn die Formhälfte ein preiswert in großen Stückzahlen herstellbares Schmiedebauteil ist. Zur Erhöhung der Haltbarkeit kann der Verbindungsabschnitt in den Anlagebereichen eine dickere, d. h. verstärkte Wandstärke aufweisen.

Ausführungsbeispiele der Achseinbindung werden im Folgenden anhand der zugehörigen Zeichnungen erläutert. Darin zeigen:
- Figur 1: die Achseinbindung einer gefederten Fahrzeugachse in einer Seitenansicht;
- Figur 2: die Achseinbindung in einer perspektivischen Darstellung, wobei der Achskörper und der Längslenker geschnitten dargestellt sind;
- Figur 3: eine zweite Ausführungsform der Achseinbindung in einer Seitenansicht;
- Figur 4: die Gegenstände nach Figur 3 in einer perspektivischen und entlang des Längslenkers geschnittenen Darstellung;
- Figur 5: eine dritte Ausführungsform einer Achseinbindung in perspektivischer Darstellung und
- Figur 6: die Gegenstände nach Figur 5, jedoch nach Art einer Explosionsdarstellung getrennt.

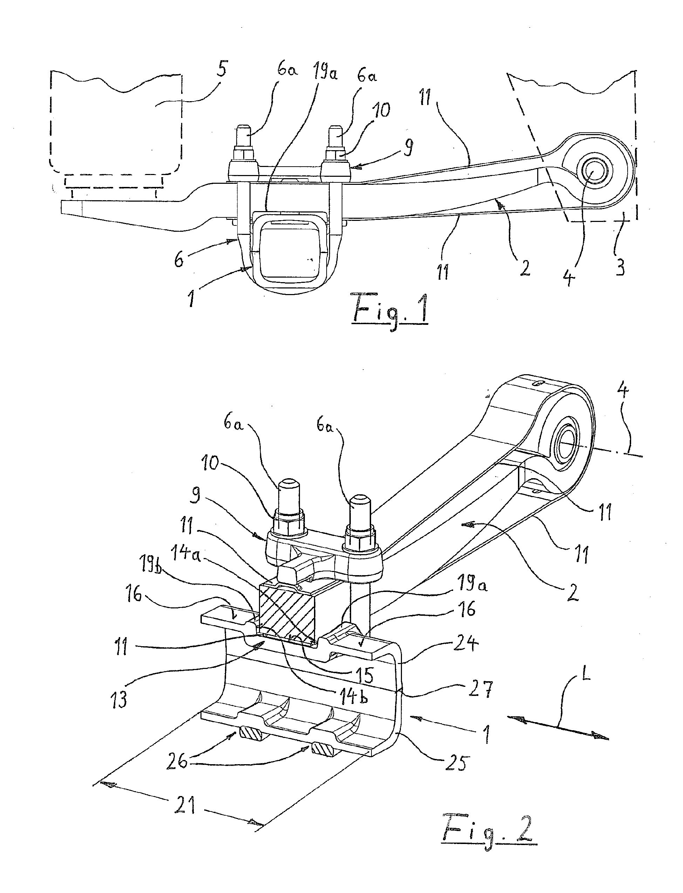

Die in Fig. 1 in einer Ansicht von der Seite her dargestellte, luftgefederte Fahrzeugachse findet vor allem bei Schwerlastfahrzeugen, z. B. Lkw-Anhängern, als nicht-angetriebene Achse Verwendung. Die Fahrzeugachse verfügt über einen durchgehenden, starren Achskörper 1, an dessen Enden sich die Radnaben mit den Fahrzeugrädern befinden. Der dargestellte Achskörper 1 ist insgesamt rohrförmig und setzt sich aus mehreren Längsabschnitten zusammen.

Zu seinen Enden hin ist der Achskörper 1 an jeweils einem Längslenker 2 abgestützt, welcher den Achskörper 1 kreuzt. Die beiden Längslenker 2, von denen jeweils nur ein Längslenker dargestellt ist, sind von rechteckigem Querschnitt und bei dem hier beschriebenen Ausführungsbeispiel als Lenkerfedern gestaltet und bestehen aus einem stark dimensionierten Federstahl. Im Bereich der Verbindung von Längslenker 2 und Achskörper 1 ist die Unterseite des Längslenkers flach und eben gestaltet und insbesondere frei von irgendwelchen Verbindungsstrukturen. In Fahrzeugrichtung vorne ist jeder Längslenker 2 an einer fahrzeugfesten Konsole 3 um die Achse 4 verschwenkbar gelagert. An ihrem anderen, hinteren Ende stützt sich die Lenkerfeder über eine Luftfeder 5 gegenüber dem Fahrzeugchassis ab.

Die Achseinbindung, d.h. die sich kreuzende Verbindung des Achskörpers 1 mit dem jeweiligen Längslenker 2, erfolgt mittels Zugelementen 6, die quer sowohl zu dem Längslenker 2, wie auch zu dem Achskörper 1 verlaufen.

Bei dem Ausführungsbeispiel nach den Figuren 1 und 2 werden für jede Achseinbindung zwei Zugelemente 6 in Gestalt von U-Bügeln verwendet. Der eine U-Bügel befindet sich auf der einen Seite und der andere U-Bügel auf der anderen Seite des Längslenkers 2. Jeder U-Bügel umschließt mit seinem Bogen den Achskörper 1, wobei die freien Enden 6a sich bis oberhalb des Längslenkers 2 erstrecken. In diesem Bereich ist jedes Zugelement 6 als Gewindestange ausgebildet. Deren Gewindeabschnitte erstrecken sich durch eine Platte 9 hindurch, welche Platte 9, dem Achskörper 1 abgewandt, auf dem Längslenker 2 aufsitzt. Die Platte 9, welche seitlich über den Längslenker 2 übersteht, weist dort Bohrungen für den Durchtritt der Gewindeabschnitte der Zugelemente 6 auf. Über Muttern 10 erfolgt das Anziehen der Zugelemente 6, wodurch diese den Achskörper 1 und den jeweiligen Längslenker 2 in gegenseitiger Anlage einbinden. Separate Formschlusselemente zwischen Achskörper 1 und Längslenker 2 sind bei dieser Bauweise nicht erforderlich. Allenfalls ein an sich übliches Fangblech 11, welches Bestandteil des Längslenkers 2 ist, kann sich noch zwischen Achskörper 1 und Lenkerfeder befinden, wie dies Figur 2 zeigt.

Fig. 2 gibt einen vertikalen Schnitt durch die Mittelebene des Achskörpers 1 wieder und lässt daher die Merkmale der Achseinbindung erkennen. Im Einbindungsbereich, und auch nur dort, ist der Achskörper 1 mit einer Formstruktur 13 versehen, welche eine Lenkeraufnahme bildet. Die Formstruktur 13 nimmt den Längslenker 2 formkorrespondierend auf, und bindet diesen in Längsrichtung L des Achskörpers, d. h. quer zur Fahrtrichtung. Im Einzelnen weist die Formstruktur 13 zwei Stützflächen 14a, 14b auf, wobei sich die Stützfläche 14a von der einen und die Stützfläche 14b von der anderen Seite her gegen die Seitenwand des Längslenkers 2 abstützt. Durch diese Gestaltung ist ein seitlicher Versatz des Achskörpers 1 in Bezug auf den Längslenker 2 ausgeschlossen. Zwischen den einander zugewandten Stützflächen 14a, 14b erstreckt sich eine im Wesentlichen eben gestaltete Anlagefläche 15, wodurch die Stützflächen 14a, 14b gemeinsam mit dieser Anlagefläche 15 eine im Querschnitt kanalförmig gestaltete Lenkeraufnahme bilden. An der Anlagefläche 15 kann sich der Achskörper 1 unmittelbar, d. h. durch direkten Kontakt, an dem Längslenker 2 abstützen, eventuell unter Zwischenlage des bereits beschriebenen Fangblechs 11 des Längslenkers.

Gemäß Fig. 2 kann die Anlagefläche 15 im Vergleich zu der übrigen Außenseite 16 des Achskörpers 1 abgesenkt sein. In diesem Fall befindet sich die Anlagefläche 15 näher an der Achskörpermittellinie, als die benachbarten Bereiche der Achskörper-Außenseite 16. Beide können aber auch in derselben Ebene liegen. Für größte Festigkeit bei geringem Gewicht kann es von Vorteil sein, wenn das Material des Achskörpers 1 im Bereich der Anlageflächen 15 eine größere Dicke aufweist.

Zur Bildung genügend ausgeprägter Stützflächen 14a, 14b tragen Rippen 19a, 19b bei, welche die benachbarten Achskörper-Außenseiten 16 überragen.

Die Lenkeraufnahme 13 des Achskörpers 1 im Bereich der Einbindung lässt sich an einem Achskörper in Gestalt eines durchgehenden Achsrohres nur schwer herstellen. Bevorzugt wird vielmehr eine Gestaltung des Achskörpers aus einzelnen Längsabschnitten, wobei der im Einbindungsbereich gelegene Längsabschnitt des Achskörpers als Verbindungsabschnitt 21 gestaltet und im folgenden auch so bezeichnet wird ist. Die Länge dieses Verbindungsabschnitts 21 in Achskörper-Längsrichtung L ist wie in Figur 2 dargestellt. Nach Fahrzeuginnen schließt sich an den Verbindungsabschnitt 21 des Achskörpers ein auf der Zeichnung nicht dargestelltes Zentralrohr an. Das Zentralrohr weist, ebenso wie der dargestellte Verbindungsabschnitt 21, einen Rechteckquerschnitt auf, dessen Kanten als Übergangsradien gestaltet sind. Die Befestigung des Verbindungsabschnitts 21 an dem fahrzeugmittig angeordneten Zentralrohr des Achskörpers erfolgt durch Schweißen.

An seinem anderen, fahrzeugaußen liegenden Ende ist an den dargestellten Verbindungsabschnitt 21 ein Radträgerabschnitt angeschweißt. Bestandsteil des Radträgerabschnitts ist der Achsschenkel für die Lagerung des Fahrzeugrades sowie ferner ein Flansch oder Träger für die Befestigung der Fahrzeugbremse.

Der Achskörper 1 setzt sich daher in Längsrichtung L aus insgesamt fünf Längsabschnitten zusammen, nämlich dem ersten Radträgerabschnitt, dem ersten Verbindungsabschnitt 21, dem Zentralrohr, dem zweiten Verbindungsabschnitt 21 sowie dem zweiten Radträgerabschnitt.

Bei dem Ausführungsbeispiel nach den Figuren 1 und 2 ist der Verbindungsabschnitt 21 des Achskörpers seinerseits in zwei Formhälften 24, 25 unterteilt. Die Formhälfte 24 ist die dem Längslenker 2 zugewandte Formhälfte, an der auch die Formstruktur bzw. Lenkeraufnahme 13 einstückig ausgebildet ist. Die andere Formhälfte 25 bildet hingegen den dem Längslenker abgewandten Teilumfang des Achskörpers. Die Formhälfte 25 ist mit einer Formstruktur 26 in Gestalt zweier Vertiefungen versehen. In jeder Vertiefung sitzt der U-förmige Bügelbereich eines der beiden Zugelemente 6. Die als Vertiefungen gestalteten Formstrukturen 26 nehmen daher die Zugelemente 6 formkorrespondierend auf und binden diese in Längsrichtung L des Achskörpers, wodurch es zu keinem Verrutschen der U-Bügel relativ zu dem Achskörper kommen kann.

Aus Gewichtsgründen sind die beschriebenen Formhälften 24, 25 nicht massiv, sondern sie sind als Halbschalen ausgebildet. Die Halbschalen ergänzen sich mittels zweier in Längsrichtung L geführten Schweißnähte 27 zu einem Rohrstück, welches der Verbindungsabschnitt 21 ist. Die Herstellung der beiden Halbschalen kann durch Hochdruckinnenformen, durch Kaltfließpressen oder konventionell durch Schmieden erfolgen. Mit allen diesen Verfahren ist es möglich, die Wandstärken der halbschalenförmigen Formhälften 24, 25 exakt gemäß dem jeweiligen Belastungszustand zu dimensionieren. Von Vorteil ist insbesondere, wenn die Wandstärke im Bereich der Übergangsradien 28 des Verbindungsabschnitts 21 gleich und jedenfalls nicht größer ist, als die Wandstärke in den vier ebenen Wandabschnitten. Bei konventionellen Achskörpern in Gestalt von langgestreckten, quadratischen Achsrohren hingegen fallen durch die notwendige Festigkeit im Bereich der Achseinbindung die Wanddicken im Bereich der Übergangsradien größer aus, als im Bereich der ebenen Wandabschnitte. Dies führt zu einer gewichtserhöhenden Materialanhäufung in den Radienbereichen.

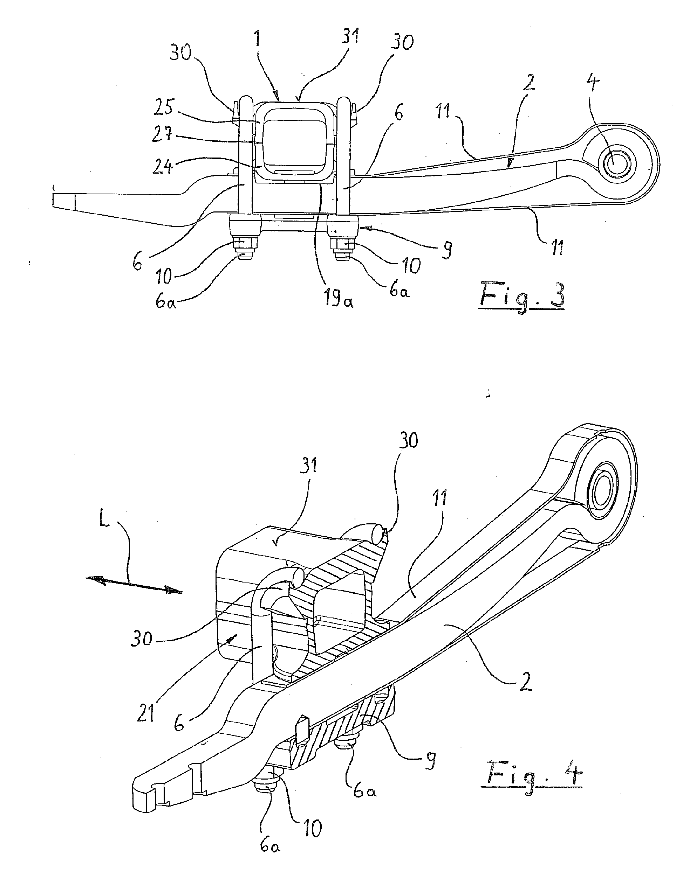

In den Figuren 3 und 4 sowie 5 und 6 sind jeweils weitere Ausführungsformen der Achseinbindung dargestellt. Für gleiche oder gleich wirkende Teile werden darin dieselben Bezugszeichen wie bei dem ersten Ausführungsbeispiel verwendet.

Bei der Ausführungsform nach den Figuren 3 und 4 ist die Anordnung von Achskörper und Längslenker umgekehrt, d. h. der Achskörper 1 befindet sich oben und der Längslenker 2 unten. Anders ist auch die Anordnung der beiden Zugelemente 6. Diese sind zwar ebenfalls bügelförmig gestaltet, jedoch schlingt sich jeder Bügel nicht um den Achskörper 1, sondern um den Längslenker 2. Als Widerlager für jedes Zugelement 6 dient ein einstückig an der Formhälfte 25 angeformter Vorsprung 30. Der Vorsprung 30 wird von dem U-förmig gebogenen Abschnitt des jeweiligen Zugelements 6 umschlungen. Der Vorteil dieser Lösung besteht darin, dass das Zugelement 6 nicht oder nur geringfügig über die Außenseite 31 der Formhälfte 25 übersteht.

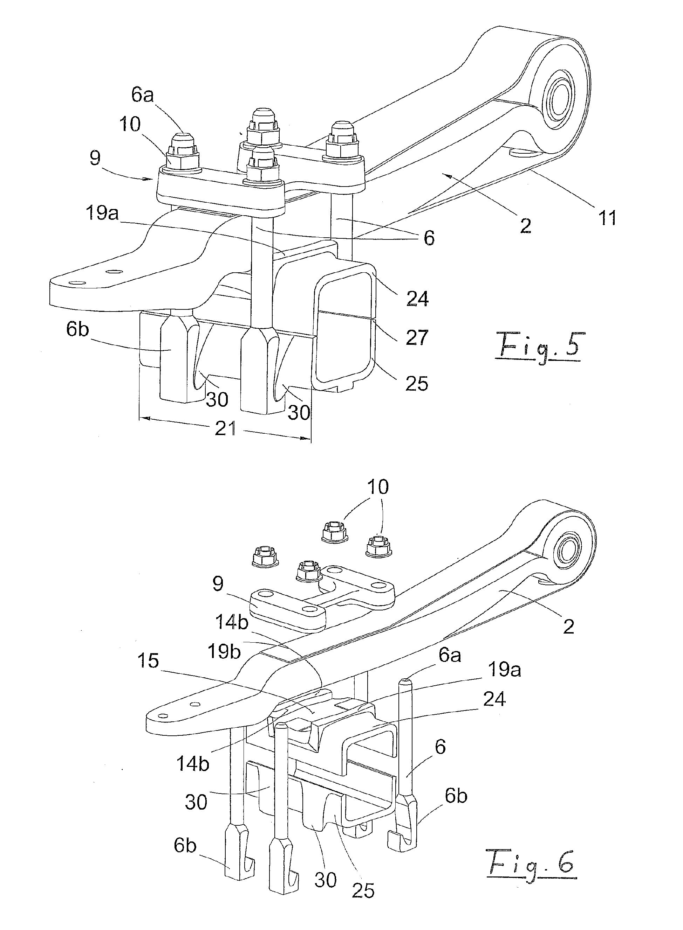

Bei der Ausführungsform nach den Figuren 5 und 6 sind die Zugelemente 6 nicht als Bügel gestaltet, sondern als im Wesentlichen gerade Zugstangen. Längslenkerseitig stützen sich diese, durch die Muttern 10 gesichert, an der gemeinsamen Platte 9 ab. An ihren anderen Enden sind die Zugelemente 6 mit Haken 6b versehen. Die Haken 6b hintergreifen wiederum Vorsprünge 30 des Achskörpers. Die Vorsprünge 30 sind einstückig an der dem Längslenker 2 abgewandten Halbschale bzw. Formhälfte 25 angeformt, hier in Form von Nasen.

In einer nicht dargestellten, weiteren Ausführungsform kann der Verbindungsabschnitt 21 zur variablen Abstandspositionierung der Längslenker 2 auch mehrere, in Längsrichtung L nebeneinander liegende, gleiche Formstrukturen 13, 26 aufweisen. Insbesondere bei dieser Ausführungsform können die beiden Verbindungsabschnitte 21 ohne Zwischenschaltung eines Zentralrohrs als mittlerer Längsabschnitt direkt miteinander verbunden sein. Auf diese Weise ergibt sich ein Achskörper mit vier Längsabschnitten. Auch denkbar ist ein Längsabschnitt 21, der sowohl den linken, als auch den rechten Längslenker 2 aufnimmt. Auf diese Weise ergibt sich ein Achskörper mit drei Längsabschnitten.

Gemeinsam ist den beschriebenen Achseinbindungen, dass es für das Prinzip der Verbindung keine Rolle spielt, ob der Achskörper 1 an der Unterseite (wie z. B. bei Fig. 1), oder an der Oberseite (wie z. B. bei Fig. 3) der Längslenker 2 angeordnet ist.

### Bezugszeichen

- 1: Achskörper
- 2: Längslenker
- 3: Konsole
- 4: Achse
- 5: Luftfeder
- 6: Zugelement
- 6a: Ende
- 6b: Haken
- 9: Platte
- 10: Mutter
- 11: Fangblech
- 13: Formstruktur, Lenkeraufnahme
- 14a: Stützfläche
- 14b: Stützfläche
- 15: Anlagefläche
- 16: Außenseite
- 19a: Rippe
- 19b: Rippe
- 21: Verbindungsabschnitt (Längsabschnitt des Achskörpers)
- 24: Formhälfte, Halbschale
- 25: Formhälfte, Halbschale
- 26: Formstruktur
- 27: Schweißnaht
- 30: Vorsprung
- 31: Außenseite

- L: Längsrichtung

## Patentansprüche

1. Achseinbindung für eine gefederte Fahrzeugachse mit einem langgestreckten Achskörper (1), den Achskörper (1) an seiner Ober- oder Unterseite kreuzenden Längslenkern (2) sowie quer sowohl zu den Längslenkern (2), wie auch zu dem Achskörper (1) verlaufenden, diese Teile in gegenseitiger Anlage einbindenden Zugelementen (6), wobei der Achskörper (1) im Einbindungsbereich mit einer Formstruktur (13) versehen ist, welche den Längslenker (2) in Längsrichtung (L) des Achskörpers (1) örtlich bindet,
**dadurch gekennzeichnet,**
**dass** die Formstruktur (13) zur formkorrespondierenden Aufnahme des Längslenkers (2) zwei Stützflächen (14a, 14b) aufweist, von denen sich die eine von der einen und die andere von der anderen Seite her gegen die Seitenwand des Längslenkers (2) abstützt.

2. Achseinbindung nach Anspruch 1,
**dadurch gekennzeichnet,**
**dass** die Formstruktur (13) eine auf einen Längsabschnitt des Achskörpers (1) beschränkte Vertiefung ist.

3. Achseinbindung nach Anspruch 2, **dadurch gekennzeichnet, dass** der Achskörper (1) im Einbindungsbereich rohrförmig ist, und dass die Vertiefung eine Verformung des Rohrquerschnitts ist.

4. Achseinbindung nach Anspruch 1,
**dadurch gekennzeichnet,**
**dass** an dem Achskörper (1) zur gegenseitigen Anlage von Achskörper (1) und Längslenker (2) eine Anlagefläche (15) ausgebildet ist.

5. Achseinbindung nach Anspruch 4,
**dadurch gekennzeichnet,**
**dass** die Anlagefläche (15) im Wesentlichen eben ist.

6. Achseinbindung nach Anspruch 4 oder 5,
**dadurch gekennzeichnet,**
**dass** die Stützflächen (14a, 14b) gemeinsam mit der Anlagefläche (15) eine kanalförmig gestaltete Lenkeraufnahme (13) bilden.

7. Achseinbindung nach einem der vorangehenden Ansprüche,
**dadurch gekennzeichnet,**
**dass** sich der Achskörper (1) aus mehreren Längsabschnitten zusammensetzt, und dass die Längsabschnitte umfassen:
a) zwei Verbindungsabschnitte (21), an denen einstückig die Formstrukturen (13) ausgebildet sind und
b) ein Zentralrohr als mittleren Längsabschnitt, an dessen Enden die Verbindungsabschnitte (21) vorzugsweise durch Schweißen befestigt sind.

8. Achseinbindung nach Anspruch 7,
**dadurch gekennzeichnet,**
**dass** die Längsabschnitte des Achskörpers (1) ferner Radträgerabschnitte umfassen, die außen an den Verbindungsabschnitten (21) vorzugsweise durch Schweißen befestigt sind.

9. Achseinbindung nach Anspruch 7 oder 8,
**dadurch gekennzeichnet,**
**dass** jeder Verbindungsabschnitt (21) entlang einer sich in Achskörperlängsrichtung (L) erstreckenden Trennebene in zwei Formhälften (24, 25) unterteilt ist.

10. Achseinbindung nach Anspruch 9,
**dadurch gekennzeichnet,**
**dass** die Formhälften (24, 25) Halbschalen sind, die sich zu einem Rohrstück ergänzen.

11. Achseinbindung nach Anspruch 10,
**dadurch gekennzeichnet,**
**dass** das durch Halbschalen (24, 25) gebildete Rohrstück einen Rechteckquerschnitt mit vier Wandabschnitten und vier Übergangsradien aufweist, und dass die Wandstärke in den Übergangsradien nicht größer als in den Wandabschnitten ist.

12. Achseinbindung nach einem der Ansprüche 9 bis 11,
**dadurch gekennzeichnet,**
**dass** die beiden Stützflächen (14a, 14b) und die Anlagefläche (15) einstückig an der ersten Formhälfte (24) angeformt sind.

13. Achseinbindung nach einem der vorangehenden Ansprüche,
**dadurch gekennzeichnet,**
**dass** im Einbindungsbereich die Unterseiten der einen rechteckigen Querschnitt aufweisenden Längslenker (2) flach und eben sind.
